(19) Europäisches Patentamt
European Patent Office
Office européen des brevets

(11) **EP 3 940 913 A1**

(12) **EUROPÄISCHE PATENTANMELDUNG**

(43) Veröffentlichungstag:
**19.01.2022  Patentblatt 2022/03**

(21) Anmeldenummer: **20185775.2**

(22) Anmeldetag: **14.07.2020**

(51) Internationale Patentklassifikation (IPC):
*H02J 3/38* (2006.01)   *H02J 3/48* (2006.01)
*H02J 3/50* (2006.01)   *H02J 3/18* (2006.01)

(52) Gemeinsame Patentklassifikation (CPC):
**H02J 3/38; H02J 3/1821; H02J 3/48; H02J 3/50**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Orcan Energy AG
81379 München (DE)**

(72) Erfinder:
• **Bischoff, Alexander
  85221 Dachau (DE)**

• **Weigand, Fabian
  81379 München (DE)**

(74) Vertreter: **Grünecker Patent- und Rechtsanwälte
PartG mbB
Leopoldstraße 4
80802 München (DE)**

Bemerkungen:
Geänderte Patentansprüche gemäss Regel 137(2)
EPÜ.

(54) **ERZEUGUNGSEINHEIT MIT INTEGRIERTER LEISTUNGSELEKTRONIK ZUR EINHALTUNG VON EINSPEISEANFORDERUNGEN ÖFFENTLICHER STROMNETZE**

(57)     Eine Erzeugungseinheit, EZE (200), mit einem Asynchrongenerator mit einem unmittelbaren Verbindungs-Zweig zu einem Stromnetz (270); einer Messeinrichtung (260) zur Bestimmung der Verläufe einer EZE-Netzspannung und eines EZE-Netzstroms an dem Stromnetz (270); und einer Leistungselektronik (230), die parallel zu dem Asynchrongenerator und dem Stromnetz (270) geschaltet ist. Die Leistungselektronik (230) umfasst einen Wechselrichter (233) mit einem Wechselrichterausgang zur unmittelbaren Verbindung mit dem Generator-Stromnetz-Zweig; einen Zwischenkreis-Energiespeicher (232); und eine Steuereinheit (236). Die Steuereinheit (236) kann basierend auf dem gemessenen Netzstrom und der gemessenen Netzspannung einen Phasenverschiebungswinkel und den Betrag des Netzstroms bestimmen und basierend hierauf den Wechselrichter (233) so ansteuern, dass Betrag und Phasenverschiebungswinkel des Ausgangsstroms der Leistungselektronik Werte annehmen, die zusammen mit dem Strom des Asynchrongenerators einen Soll-Phasenverschiebungswinkel ergeben. Des Weiteren bezieht sich die Erfindung auf eine Erzeugungsanlage, EZA (300), welche die genannte EZE (200) umfasst.

FIG. 2A

FIG. 2B

**Beschreibung**

**TECHNISCHES FELD**

Die vorliegende Erfindung bezieht sich auf eine Erzeugungseinheit, EZE, mit integrierter Leistungselektronik zur Einhaltung von Einspeiseanforderungen öffentlicher Stromnetze zur Verbesserung der Netzstabilität sowie auf eine Erzeugungsanlage, EZA, mit der EZE.

**HINTERGRUND DER ERFINDUNG**

Wird durch eine Maschine nicht-elektrische in elektrische Energie umgewandelt, um ins öffentliche Versorgungsnetz eingespeist zu werden, gelten hierbei bestimmte Anforderungen zur Erhaltung der Netzstabilität wie beispielsweise die Möglichkeit der ferngesteuerten Wirkleistungsreduktion, der Wirkleistungsanpassung bei Frequenzabweichungen, der Bereitstellung von Blindleistung zur statischen Spannungshaltung und Fault-Ride-Through, also das Durchfahren einer starken Spannungsänderung mit der hochdynamischen Netzstützung mittels Blindstrom. Diese Anforderungen sind je nach nationalem Regelwerk in Richtlinien, Anwendungsregeln, Dekreten oder Ähnlichem festgelegt.

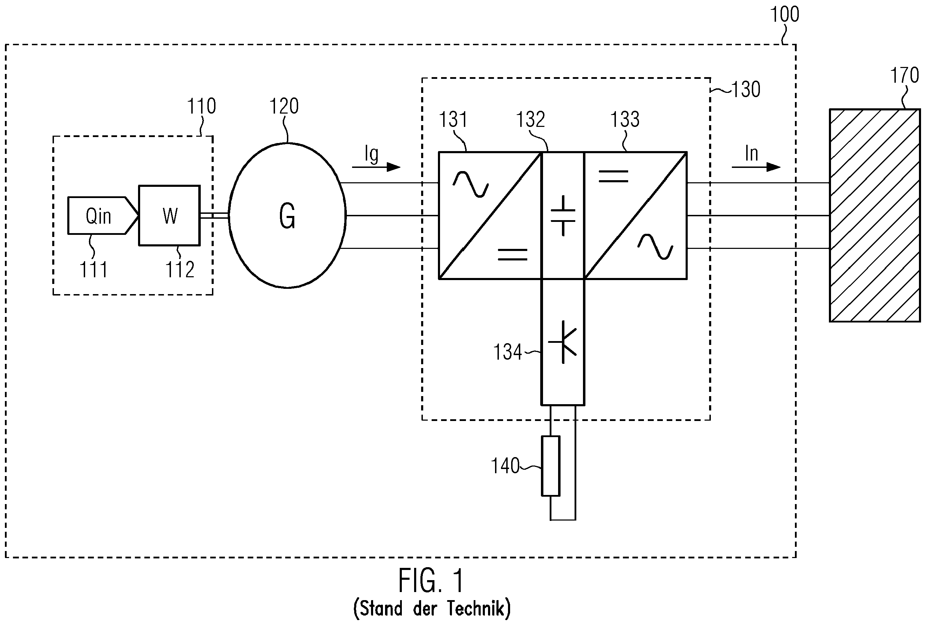

Üblicherweise werden diese Anforderungen für eine EZE vollständig oder teilweise durch die Verwendung eines fremderregten Synchrongenerators oder durch den Einsatz eines Frequenzumrichtersystems zwischen Generator und Stromnetz gemäß Figur 1 umgesetzt. Ist der Synchrongenerator hinsichtlich der Erregung und damit der Blindleistung nicht regelbar, muss zwischen ihm und dem Stromnetz ebenfalls ein Frequenzumrichtersystem eingesetzt werden.

Figur 1 zeigt den schematischen Aufbau einer aus dem Stand der Technik bekannten EZE (100) mit einer zu einem elektrischen Drehstromgenerator (120) seriell verschalteten Leistungselektronik (130), welche die vom Generator gelieferte Wirkleistung in ein öffentliches Stromnetz (170) einspeist und dabei auch Blindleistung in allen möglichen Quadranten bereitstellt.

Hierbei wird der vom Generator erzeugte Strom zunächst mit einem Gleichrichter/Generatorumrichter (131) gleichgerichtet und über den Zwischenkreiskondensator (132) geführt, um dann mittels eines Wechselrichters/ Netzumrichters (133) durch Modulation (z.B. Pulsweitenmodulation, PWM) wieder in einen näherungsweise sinusförmigen Wechselstrom mit einer der Netzspannung gleichen Frequenz umgewandelt zu werden. Je nach geforderter Blindleistung wird dabei der Strom früher oder später bezogen auf die Netzspannung ins Netz eingespeist. Theoretisch sind auch Umrichtersysteme ohne Zwischenkreis oder Mischformen denkbar.

Ebenso kann die ins Stromnetz (170) eingespeiste Wirkleistung durch die Bestromung eines Bremswiderstands (140), dem 'Chopper', geregelt werden: Hierbei wird über einen elektronischen Schalter (134), den sogenannten 'Chopper', der Bremswiderstand (140) parallel zum Zwischenkreiskondensator (132) taktend geschaltet, sodass überschüssige Energie im Zwischenkreiskondensator (132) in thermische Energie umgewandelt wird. In der Regel wird der Chopper automatisch bei Überschreiten einer bestimmten Zwischenkreisspannung aktiviert, was die Folge der Leistungsbegrenzung des Netzumrichters (133) ist und wodurch mehr Strom in den Zwischenkreis eingeprägt wird als auch entnommen werden kann.

Alternativ oder zusätzlich kann über die Regelung der Prozess-Eintrittsleistung (111) einer Primärenergiequelle, welche mit einem Primärenergiewandler (112) in mechanische Leistung zum Antrieb des Generators (120) umgewandelt wird, die letztendlich geforderte Netz-Einspeiseleistung eingestellt werden.

Diese Ausführung weist den Nachteil auf, dass die gesamte vom Generator (120) bereitgestellte Wirkleistung über die verlustbehaftete Leistungselektronik (130) geführt werden muss. Des Weiteren erfordert die serielle Verschaltung der Leistungselektronik (130) zwei Umrichter, einen Gleich- (131) und einen Wechselrichter (133).

Der Erfindung liegt die Aufgabe zugrunde, eine EZE bereitzustellen, welche die genannten Nachteile überwindet.

Diese Aufgabe wird durch den Gegenstand des Anspruchs 1 gelöst.

Vorteilhafte Ausführungsformen sind Gegenstand der Unteransprüche.

**ZUSAMMENFASSUNG**

Im Folgenden wird eine Zusammenfassung bereitgestellt, um eine Auswahl repräsentativer Konzepte in vereinfachter Form vorzustellen, auf die in der folgenden detaillierten Beschreibung näher eingegangen wird.

Gemäß bevorzugten Ausgestaltungen kann eine EZE aus einem Asynchrongenerator mit einem unmittelbaren Verbindungs-Zweig zu einem Stromnetz, einer Messeinrichtung zur Bestimmung der Verläufe einer EZE-Netzspannung und eines EZE-Netzstroms an dem Stromnetz sowie einer Leistungselektronik bestehen.

Dabei kann die Leistungselektronik parallel zu dem Asynchrongenerator und dem Stromnetz geschaltet werden, um einen zur Netzspannung verschobenen Strom in das Stromnetz einzuspeisen. Die Leistungselektronik kann dabei vorzugsweise an einem Knotenpunkt innerhalb der EZE mit dem Asynchrongenerator und dem Stromnetz parallel geschaltet werden. Die an dem Knotenpunkt anliegende Spannung kann dabei einer Niederspannung im Bereich von etwa 0,4 kV entsprechen.

Die Leistungselektronik kann einen Wechselrichter mit einem Wechselrichter-Ausgang zur unmittelbaren Verbindung mit dem Generator-Stromnetz-Zweig und einen Zwischenkreis-Energiespeicher mit einer Zwischenkreisspannung umfassen, welcher DC-seitig parallel mit dem Wechselrichter verbunden ist. Ebenso kann die Leistungselektronik eine Steuereinheit umfassen. Dabei entspricht der Zwischenkreis-Energiespeicher vorzugsweise einem Zwischenkreis-Kondensator und der Wechselrichter einem Zweipunkt-, Dreipunkt- oder Multi-level-Wechselrichter. Ebenso kann der Wechselrichter einen Ausgangsfilter zur Glättung des pulsierenden Wechselrichter-Ausgangsstroms umfassen, welcher seriell zwischen den Ausgangsklemmen des Wechselrichters und dem Knotenpunkt verschaltet sein kann.

Die Steuerungseinheit kann basierend auf einem gemessenen EZE-Netzstrom und einer gemessenen Netzspannung einen Phasenverschiebungswinkel und den Betrag des EZE-Netzstroms bestimmen und hierauf basierend den Wechselrichter ansteuern oder regeln, sodass der Betrag und der Phasenverschiebungswinkel des Ausgangsstroms der Leistungselektronik Werte annehmen, welche zusammen mit dem Strom des Asynchrongenerators einen Soll-Betrag und einen Soll-Phasenverschiebungswinkel des EZE-Netzstroms ergeben. Dabei wird der Wechselrichter vorzugsweise mit einem pulsweitenmodulierten Signal angesteuert. Die Ansteuerung des Wechselrichters kann dabei vorzugsweise eine Toleranzband-Regelung oder eine Vektor-Regelung in einem mit Netzfrequenz umlaufenden d/q-Koordinatensystem aufweisen. Zudem kann die Steuereinheit basierend auf dem gemessenen Netzstrom und der gemessenen Netzspannung einen Betrag des Netz-Wirkstroms bestimmen.

Ebenso kann der Wechselrichter von der Steuerungseinheit basierend auf der Zwischenkreisspannung des Zwischenkreis-Energiespeichers so angesteuert werden, dass durch Pulsweitenmodulation, PWM, die Zwischenkreisenergie in einen annähernd sinusförmigen, dreiphasigen Wechselstrom mit einer dem Stromnetz annähernd gleichen Frequenz, variabler Amplitude und einer variablen Phasenverschiebung zwischen Netzspannung und dem Wechselrichter-Ausgangsstrom umgewandelt wird.

Weiterhin kann die EZE einen Chopper mit einem seriellen Bremswiderstand zur Regelung der Netz-Einspeise-Wirkleistung umfassen. Die Serie aus Chopper und Bremswiderstand kann dabei parallel zur DC-Seite des Wechselrichters verschaltet sein. Dabei kann der Chopper durch einen Spannungsvergleich mit einer Hysterese so angesteuert werden, dass die im Zwischenkreis-Energiespeicher gespeicherte Energie durch die Einschaltung des Bremswiderstands in thermische Energie umgewandelt werden kann. Ebenso kann die Ansteuerung des Choppers eine Toleranzband-Regelung aufweisen. Wird der Wechselrichter also so angesteuert, dass ein Strom aus dem Knotenpunkt Richtung Zwischenkreis fließt und dessen Spannung dadurch ansteigt, kann der Chopper die überschüssige Energie auf den Bremswiderstand abführen und eine Regelung der Netz-Einspeise-Wirkleistung ermöglichen.

Zudem kann die EZE eine Organic-Rankine-Cycle, ORC, Einheit/Anlage mit einer Expansionsmaschine umfassen, welche den Asynchrongenerator antreiben kann. Der Asynchrongenerator kann in die Expansionsmaschine integriert sein, wobei der Asynchrongenerator vorzugsweise einer Drehstromasynchronmaschine mit Kurzschluss-/Käfigläufer entspricht.

Weiterhin kann die genannte EZE innerhalb einer EZA parallel mit einer Vielzahl von weiteren EZEs an der Unterspannungsseite eines Transformators verschaltet sein. Die Oberspannungsseite des Transformators kann dabei vorzugsweise mit einem Netzanschlusspunkt eines Mittelspannungsnetzes verschaltet sein.

FIGUREN

Bevorzugte Ausführungsbeispiele der Erfindung werden nachfolgend anhand der Zeichnungen näher erläutert. Es zeigen:

Figur 1 einen schematischen Aufbau einer EZE mit seriell verschalteter Leistungselektronik gemäß dem Stand der Technik;

Figur 2A einen schematischen Aufbau einer EZE mit parallel verschalteter Leistungselektronik gemäß einer Ausführungsform der Erfindung;

Figur 2B ein vereinfachtes Ersatzschaltbild der Leistungselektronik gemäß der Ausführungsform nach Figur 2A;

Figur 3 einen schematischen Aufbau einer EZA mit einer Einspeisung in ein Mittelspannungsnetz, eine Vielzahl von EZEs umfassend;

Figur 4A ein Ersatzschaltbild eines Netzwerkes mit einer netzeinspeisenden EZE gemäß der Ausführungsform nach Figur 2A;

Figur 4B ein Zeigerdiagramm für das Ersatzschaltbild gemäß Figur 4A;

Figur 4C ein weiteres Zeigerdiagramm für das Ersatzschaltbild gemäß Figur 4A;

Figur 4D einen schematischen Verlauf der normierten Spannungsanhebung am Netzanschlusspunkt der EZE über den Verschiebungsfaktor cos $\varphi$ gemäß der Ausführungsform nach Figur 2A; und

Figur 5 einen schematischen Regelkreis für die Leistungselektronik der Ausführungsform nach Figur 2A zur Realisierung des Phasenverschiebungswinkels $\varphi$.

## BESCHREIBUNG

Soweit nicht anderweitig angegeben werden im Folgenden komplexe Zahlen in der Notation

$$\underline{X} = Re\{\underline{X}\} + jIm\{\underline{X}\} = X_r + jX_q = X\,e^{j\varphi} = X\,[\sin(\varphi) + j\cos(\varphi)]$$

verwendet.

Ferner wird, soweit nicht anderweitig angegeben, im Folgenden die Bezeichnung, Phasenverschiebungswinkel $\varphi'$ für die Phasenverschiebung zwischen der Spannung und dem entsprechenden Strom verwendet.

Des Weiteren wird, soweit nicht anderweitig angegeben, die Bezeichnung 'Betrag' für den Effektivwert einer Wechselstromgröße verwendet.

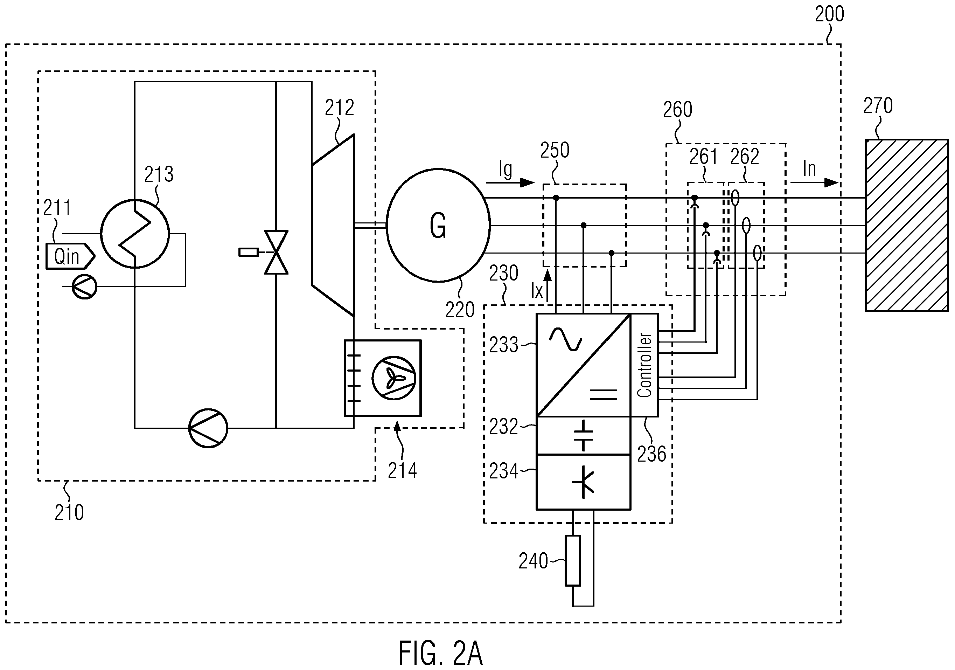

Figur 2A zeigt den schematischen Aufbau einer Erzeugungseinheit, EZE, (200) gemäß einer Ausführungsform der Erfindung, bei welcher die Leistungselektronik (230) parallel zu dem Generator (220) und dem öffentlichen Stromnetz (270) verschaltet ist.

Hierbei kann der Generator (220) unmittelbar, ohne die aus dem Stand der Technik bekannte, zwischen Generator und Stromnetz seriell verschaltete Leistungselektronik (130), mit dem Stromnetz (270) verbunden sein und kann die vom Generator (220) erzeugte elektrische Wirkleistung direkt und annähernd ohne Verluste in das Stromnetz (270) einspeisen.

Wie in Figur 2A gezeigt kann der Ausgang der Leistungselektronik (230) über einen Einspeise- bzw. Knotenpunkt (250) dem Generator und dem Stromnetz (270) parallel geschaltet werden. Hierbei kann, durch Ein- bzw. Rückspeisung eines nach Phasenwinkel und Amplitude einstellbaren Stromes, Blind- und Wirkleistung zwischen dem Knotenpunkt (250) und der Leistungselektronik (230) ausgetauscht werden. Demnach können alle EinspeiseAnforderungen der EZE (200) durch die parallel verschaltete Leistungselektronik (230) realisiert werden, ohne die elektrische Generatorleistung über die verlustbehaftete Leistungselektronik führen zu müssen.

Gemäß einem Aspekt kann die EZE (200) eine Messeinrichtung (260) mit einer Spannungsmesseinrichtung (261) zur Messung des Netzspannungsverlaufs und einer Strommesseinrichtung (262) zur Messung des Verlaufs des Netzstroms umfassen. Hierbei können die Spannungs- (261) und Strommesseinrichtungen (262) vorzugsweise jeweils drei Messsensoren zur phasenweisen Messung der Spannung bzw. Stromstärke am Stromnetz umfassen. Alternativ kann die Messung mit zwei Sensoren (Aaron-Schaltung) umgesetzt werden. Zusätzlich kann die Messeinrichtung (260) einen Leistungsmesser zur direkten Leistungsmessung umfassen.

Des Weiteren kann die EZE (200) eine in Figur 2A schematisch dargestellte Organic-Rankine-Cycle, ORC, Einheit/Anlage (210) umfassen, womit Wärmeleistung (211) in elektrische Leistung umgewandelt werden kann. Dabei kann die zugeführte Wärmeleistung (211) mit einem Verdampfer (213) auf ein Arbeitsmedium übertragen werden, welches vorzugsweise aus einer organischen Flüssigkeit besteht. Die Enthalpie des Arbeitsmedienmassenstroms kann über eine Expansionsmaschine (212) in mechanische Leistung zum Antrieb des Generators (220) eingesetzt und schließlich in elektrische Leistung zur unmittelbaren Einspeisung in das öffentliche Stromnetz (270) umgewandelt werden. Zudem kann die ORC Anlage einen Kondensator zur Verflüssigung des entspannten Arbeitsmediums umfassen (214).

Gemäß einem Aspekt kann der Generator (220) einen Asynchrongenerator umfassen, welcher vorzugsweise einer Drehstromasynchronmaschine mit Käfig- oder Kurzschlussläufer entspricht. Gemäß einem Aspekt kann der Asynchrongenerator in die Expansionsmaschine (212) integriert sein.

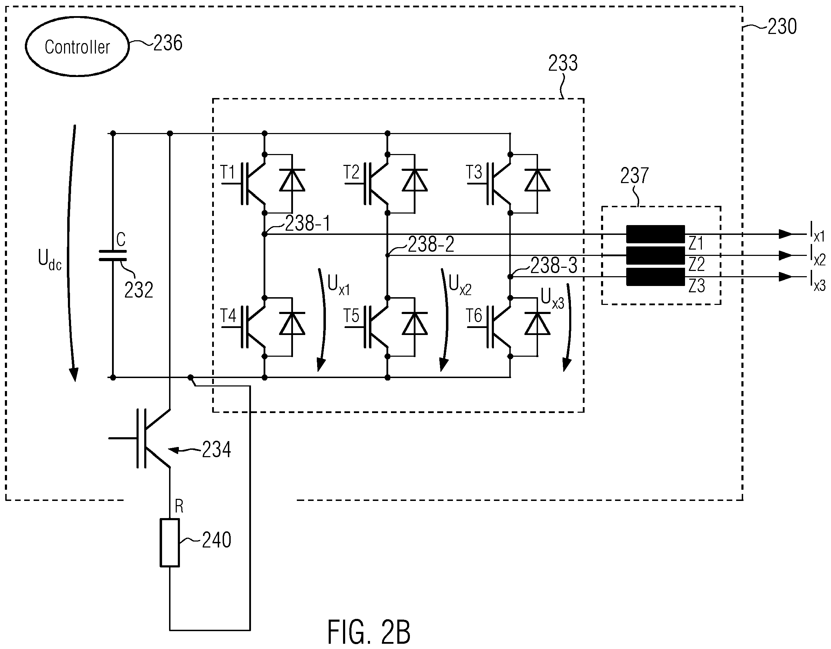

Wie in Figur 2A gezeigt kann die Leistungselektronik (230) einen Wechselrichter (233), einen Zwischenkreis-Energiespeicher (232), einen Chopper (234), einen Bremswiderstand (240) sowie eine Steuerungseinheit (236) umfassen. Diese Komponenten können im Detail entsprechend dem Schaltbild der Figur 2B verschaltet sein.

Wie in Figur 2B gezeigt kann der Zwischenkreis-Energiespeicher (232) parallel mit dem Wechselrichter (233) verbunden sein, wobei der Zwischenkreis-Energiespeicher (232) vorzugsweise einem Kondensator entspricht. Alternativ kann der Energiespeicher zusätzlich einen supraleitenden Energiespeicher, eine Brennstoffzelle und/oder eine aufladbare Batterie umfassen.

Der Wechselrichter kann vorzugsweise drei Halbbrücken mit jeweils zwei Schaltelementen umfassen, welche die am Zwischenkreis-Energiespeicher (232) anliegende Zwischenkreisspannung $U_{dc}$ positiv oder negativ gepolt auf den jeweiligen Brückenzweig bzw. jeweiligen Wechselrichter-Phasenausgang (238-1, 238-2, 238-3) schalten können. Dabei können die Schaltelemente T1... T6 des Wechselrichters (233) mit einem von der Steuerungseinheit (236) erzeugten PWM-Ansteuersignal angesteuert werden, sodass drei um 120° versetzte und näherungsweise sinusförmige Wechselspannungen $U_{x1}$ ... $U_{x3}$ erzeugt werden können. Ein Wechselrichter (233) dieser Art kann beispielsweise als Zweipunkt-Wechselrichter, Dreipunkt-Wechselrichter oder Multi-Level-Wechselrichter ausgestaltet sein. Vorzugsweise umfassen die in der Halbbrücke verwendeten Schaltelemente IGBTs mit antiparallelen Freilaufdioden, wobei die Freilaufdioden einen Energiefluss vom Stromnetz (270) in den Wechselrichter (233) ermöglichen können.

Vorzugsweise umfasst die Steuerungseinheit (236) einen Eingang, um die von der Messeinrichtung (260) gemessenen Netzspannungen und Netzströme empfangen zu können. Dabei können die von der Messeinrichtung (260) ermittelten Messergebnisse vorzugsweise über eine festverdrahtete elektrische Signalleitung oder alternativ über eine Netzwerkschnittstelle oder eine drahtlose Netzwerkschnittstelle, wie beispielsweise WLAN oder Bluetooth, der Steuerungseinheit (236) übermittelt werden.

Gemäß einem weiteren Aspekt kann der Chopper (234), wie in Figur 2B dargestellt, seriell mit dem Bremswiderstand (240) verschaltet sein. Des Weiteren kann die serielle Verschaltung aus Chopper (234) und Bremswiderstand (240) parallel zu dem Wechselrichter (233) und dem Zwischenkreis-Energiespeicher (232) verschaltet sein. Dabei kann im Gegensatz zur seriellen Verschaltung der Leistungselektronik (130) nach Figur 1, bei welcher durch die Begrenzung der eingespeisten Netzwirkleistung durch den Wechselrichter (133) die Zwischenkreisspannung ansteigt, der Wechselrichter (233) in der parallelen Verschaltung Wirkleistung in Höhe einer eingestellten Wirkleistungsreduktion in den Zwischenkreis-Energiespeicher (232) aufnehmen. Des Weiteren kann durch das zyklische Schalten des Choppers (234) der Bremswiderstand in den Strompfad geschaltet werden, sodass die im Zwischenkreis-Energiespeicher (232) gespeicherte Energie über den Bremswiderstand (240) in thermische Energie umgewandelt werden kann. Vorzugsweise besteht der Chopper (234) aus einem elektronischen Schalter wie beispielsweise einem Bipolartransistor mit isolierter Gate-Elektrode, IGBT, einem Metall-Oxid-Halbleiter-Feldeffekttransistor, MOSFET oder einem Transistor.

Gemäß einem Aspekt kann die Leistungselektronik (230) einen seriellen Ausgangsfilter oder Ausgangsdrosseln (237) zur Glättung des pulsierenden Wechselrichter-Ausgangsstroms umfassen. Dabei kann der Ausgangsfilter (237) in den Wechselrichter (233) integriert oder seriell zu dem Wechselrichter-Ausgang verschaltet sein. Vorzugsweise umfasst der Ausgangfilter (237) mindestens drei Ausgangsdrosseln, welche seriell mit dem jeweiligen Wechselrichter-Phasenausgang (238-1, 238-2, 238-3) verschaltet sein können. Alternativ oder zusätzlich kann der Ausgangsfilter (237) einen dreiphasigen Transformator zur Netzkopplung umfassen. Soweit nicht anderweitig angegeben, wird zur Vereinfachung nur der induktive Anteil der Strangimpedanzen Z1...Z3 des Ausgangsfilters betrachtet. Für den Fachmann ist verständlich, dass sich die Strangimpedanzen Z1... Z3 auch aus einer Transformatorimpedanz und/oder Netzanschlussimpedanz zusammensetzen können.

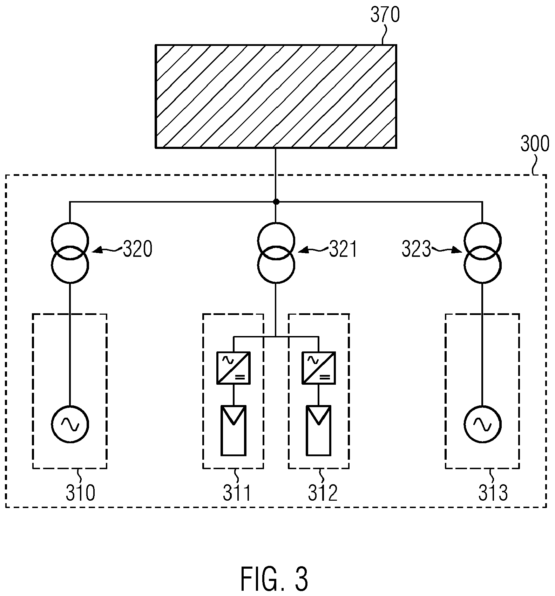

Figur 3 zeigt einen schematischen Aufbau einer Erzeugungsanlage (300), EZA, eine Vielzahl von EZEs (310...313) umfassend, wobei eine oder mehrere der EZEs, beispielsweise EZE (310), der in Figur 2A dargestellten EZE (200) oder der EZE (100) nach Figur 1 entsprechen kann. Wie in Figur 3 gezeigt, kann die bereitgestellte elektrische Energie der EZEs (310...313) über Transformatoren (320, 321, 323) an einem Netzanschlusspunkt in das öffentliche Stromnetz (370) eingespeist werden, wobei das Stromnetz vorzugsweise ein Mittelspannungsnetz mit einem 20-kV-Netzanschlusspunkt aufweist. Des Weiteren zeigt Figur 3, dass die EZEs (310-313) jeweils mit der Unterspannungsseite, entsprechend einer Niederspannungsebene, eines Transformators (320, 321, 323) verschaltet sein können. Gemäß einem Aspekt können auch mehrere EZEs (311, 312) parallel an der Unterspannungsseite eines Transformators (321) verschaltet sein. Gemäß einem Aspekt kann es sich bei den EZEs (310...313) beispielsweise um Windkraft-, Photovoltaik- oder ORC-EZEs handeln.

## Funktionsprinzip der Leistungselektronik

Vorliegend wurde der schematische Aufbau der EZE (200), der EZA (300) und der Leistungselektronik (233) beschrieben. Im Folgenden wird auf das Funktionsprinzip und die Einstellmöglichkeiten des Phasenverschiebungswinkels $\varphi$ mit der Leistungselektronik (233) gemäß der Ausführungsform nach Figur 2A bzw. Figur 2B eingegangen. Die im Folgenden dargestellten Gleichungen unterliegen der vereinfachten Annahme, dass der ohmsche Anteil der Ausgangs-, Netz-, und/oder Transformatorimpedanzen Z1... Z3 vernachlässigbar klein ist und die dreiphasige Netzspannung des öffentlichen Stromnetzes (270) näherungsweise der dreiphasigen Ausgangsspannung des Generators (220) entspricht.

Basierend auf der durch die Topologie des Wechselrichters (233) und der Netzspannung definierten Zwischenkreisspannung $U_{DC}$ kann der Wechselrichter (233) ein näherungsweise sinusförmiges und symmetrisches Drehstromsystem am Ausgang des Filters (237) generieren. Je nach Wechselrichtertyp (netzgeführt oder eigengeführt) kann dazu ein äußeres Netz notwendig sein. Dieses Drehstromsystem kann dem Stromnetz (270) und dem Generator (220) parallelgeschaltet werden.

Der erzeugte m-te Wechselrichter-Phasenausgangsstrom $i_{xm}(t)$ mit $1 \leq m \leq 3$ kann dabei einen zeitlichen Verlauf gemäß

$$i_{xm}(t) = \sqrt{2}\, I_{xm} \sin(\omega t - \varphi)$$

aufweisen, wobei $\omega$ der Winkelfrequenz der Spannung des Netzes (270), $I_{xm}$ dem Betrag bzw. Effektivwert des m-ten Wechselrichter-Phasenausgangsstroms und $\varphi$ dem Phasenverschiebungswinkel, also der Phasenverschiebung zwischen $i_{xm}$ und der m-ten Wechselrichter-Phasenausgangsspannung $u_{xm}$, entsprechen kann.

Blindleistungsbereitstellung

Basierend auf dem Betrag und dem Phasenverschiebungswinkel $\varphi$ des jeweiligen erzeugten Wechselrichter-Phasenausgangsstroms kann, ähnlich wie bei einem konventionellen Phasenschieber, Blindleistung zwischen der Leistungselektronik (230) und dem Knotenpunkt (250) ausgetauscht werden. Dazu wird der Wechselrichter-Phasenausgangsstrom verschoben zur Netzspannung eingespeist oder bezogen.

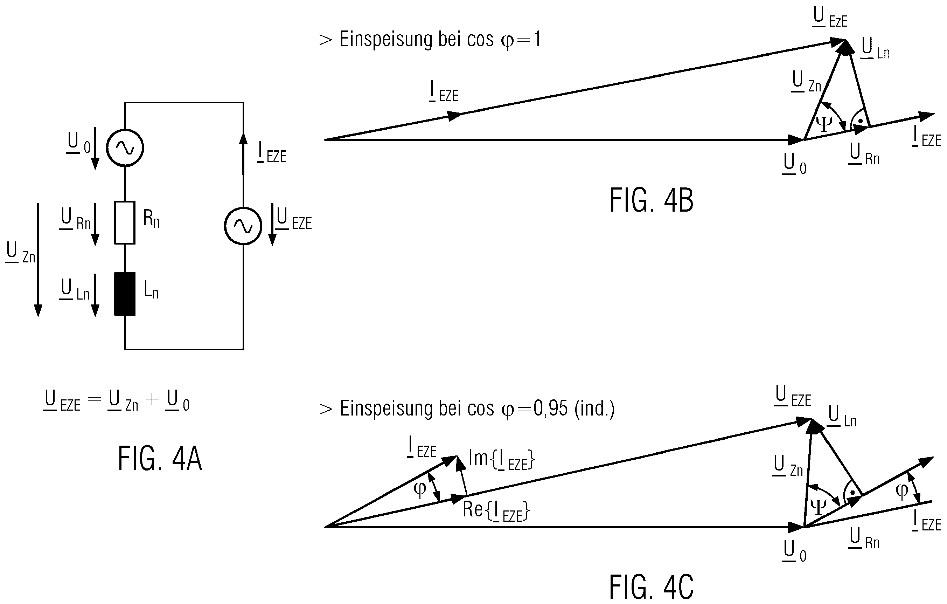

Figur 4A zeigt ein elektrisches Ersatzschaltbild eines Netzwerkes mit netzeinspeisender EZE entsprechend der Ausführungsform nach Figur 2A. Wie in Figur 4A dargestellt umfasst das elektrische Netzwerk eine Netzspannungsquelle mit der Quellenspannung $U_0$, eine Netzimpedanz mit einem Widerstand $R_n$ (Wirkwiderstand) und einer Induktivität $L_n$ (Blindwiderstand) sowie eine Leistungselektronik gemäß der Ausführungsform nach Figur 2B. Dabei kann durch Einstellung des Wechselrichter-Ausgangsstroms $\underline{I}_x$ ein Gesamt-Netzstrom $\underline{I}_{EZE}$ bereitgestellt werden, welcher einen Spannungsabfall über der Netzimpedanz gemäß $\underline{U}_{Zn} = \underline{U}_{Rn} + \underline{U}_{Ln}$ verursacht.

Damit kann, wie in dem korrespondierenden Zeigerdiagramm der Figur 4B gezeigt, reine Wirkleistung ($\varphi = 0$; $\underline{I}_{EZE} = Re\{\underline{I}_{EZE}\}$) in das Stromnetz eingespeist werden. Figur 4C zeigt einen alternativen Zustand, in welchem zusätzlich zu dem in Figur 4B eingespeisten Wirkstrom $Re\{\underline{I}_{EZE}\}$ ein Blindstrom $Im\{\underline{I}_{EZE}\}$ eingespeist wird. Der Verschiebungsfaktor $\cos \varphi$ beträgt 0,95 (induktiv).

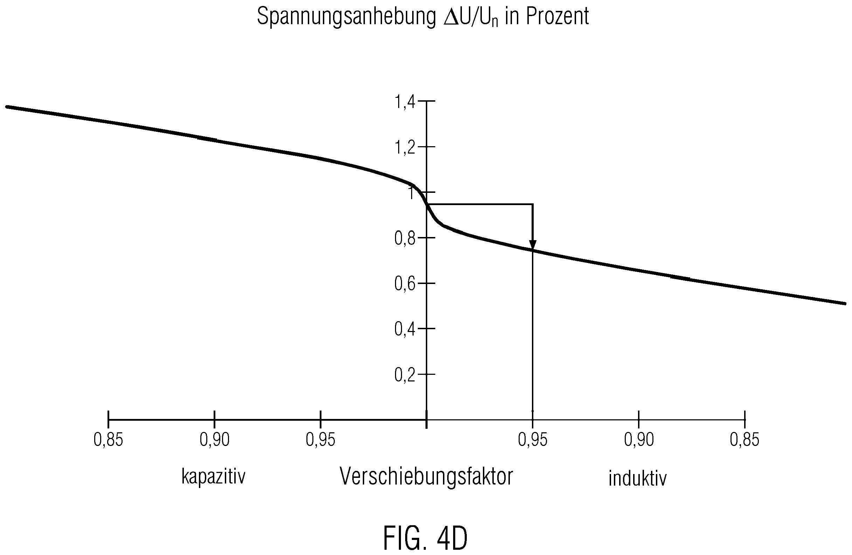

Figur 4D zeigt einen schematischen Verlauf der normierten Spannungsanhebung am Netzanschlusspunkt der EZE über den Verschiebungsfaktor $\cos \varphi$. Dabei ist die Spannungsanhebung bei einem Netzimpedanzwinkel von $\psi = 30°$ (typisch für das Niederspannungsnetz) gezeigt. Entsprechend kann durch die Phasenverschiebung des Einspeisestroms die Spannung am Netzanschlusspunkt zur 'statischen Spannungshaltung' der EZE eingestellt werden. Wie in Figur 4D gezeigt, kann beispielsweise mit einem Verschiebungsfaktor von 0,95 (induktiv), die Spannungsanhebung um etwa 20 % reduziert werden. Gemäß einem Aspekt kann die Spannung am Netzanschluss der EZE so eingestellt werden, dass die zulässigen Netzspannungsgrenzen eingehalten werden. Grundsätzlich, jedoch nach anderer Regelungsart, funktioniert so auch die Netzstützung bei starkem Spannungseinbruch, dem Low-Voltage-Ride-Through, LVRT.

Wirkleistungsregelung durch Wirkleistungsbezug der Leistungselektronik

Zusätzlich oder alternativ kann durch entsprechende PWM der Leistungselektronik (230) Wirkleistung aus dem Knotenpunkt (250) in den Zwischenkreis-Energiespeicher transferiert werden. Infolgedessen kann die Zwischenkreisspannung ansteigen und der automatisch getriggerte Chopper (234) kann die überschüssige Energie auf den Bremswiderstand (240) ableiten. Damit kann die eingespeiste Wirkleistung der EZE geregelt werden.

Gemäß einem Aspekt können, wie in Tabelle 1 gezeigt, verschiedene Phasenverschiebungswinkel zu verschiedenen Leistungsquadranten führen. Dabei werden der resultierende Strom aus der Leistungselektronik und die Auswirkung auf die Netzeinspeisung betrachtet. Hierbei wird die Ausgangssituation eines in Betrieb befindlichen ORC-Prozess betrachtet, bei welcher Wirkleistung ins Netz abgegeben und induktive Blindleistung bezogen wird. Die Zählweise entspricht dem Verbraucherzählpfeilsystem.

Tabelle 1: Einstellmöglichkeiten der PWM und deren Folgen

| Quadrant der Leistungselektronik in der komplexen Ebene | Auswirkung auf EZE-Netz-Wirkleistung | Auswirkung auf EZE-Netz-Blindleistung | Chopper-Status |
|---|---|---|---|
| 1 | Wird kleiner | Induktive Blindleistungsaufnahme steigt | AKTIV |

(fortgesetzt)

| Quadrant der Leistungselektronik in der komplexen Ebene | Auswirkung auf EZE-Netz-Wirkleistung | Auswirkung auf EZE-Netz-Blindleistung | Chopper-Status |
|---|---|---|---|
| 2 | Keine, Quadrant nicht möglich | Keine, Quadrant nicht möglich | Nicht zutreffend |
| 3 | Keine, Quadrant nicht möglich | Keine, Quadrant nicht möglich | Nicht zutreffend |
| 4 | Wird kleiner | Induktive Blindleistungsaufnahme sinkt | AKTIV |

**Wirk- und Blindleistungsregelung**

Im Folgenden wird auf die Ansteuerung des Wechselrichters (233) und des Choppers (234) mit der Steuerungseinheit (236) zur Blind- und Wirkleistungsregelung mit der Leistungselektronik (230) gemäß der Ausführungsform nach Figur 2A eingegangen.

Gemäß einem Aspekt kann der Strombetrag der Leistungselektronik $I_x$ und der Phasenverschiebungswinkel $\varphi_{xn}$ zwischen dem Strom der Leistungselektronik und der Netzspannung so eingestellt werden, dass sich durch Addition des Generatorstroms $\underline{I_g}$ ein Netzstrom $\underline{I_n}$ einstellt, welcher an einer vereinbarten Stelle die geforderte Soll-Wirkleistung und die geforderte Soll-Blindleistung bereitstellen kann. Demnach können die am Knotenpunkt (250) eingeprägten bzw. ausgetauschten Leistungselektronikströme $I_n$ einen Betrag $I_x$ und einen Phasenverschiebungswinkel $\varphi_{xn}$ gegenüber der Netzspannung gemäß

$$I_x \angle \varphi_{xn} = \underline{I_x} = \underline{I_n} - \underline{I_g} = I_{n,r} + jI_{n,q} - \left(I_{g,r} + jI_{g,q}\right)$$

aufweisen. Wie für einen Fachmann ersichtlich kann der Blindstrombetrag der Leistungselektronik abnehmen, wenn sich der Blindstrom des Generators $I_{g,q}$ und der geforderte Netz-Blindstrom $I_{n,q}$ teilweise oder vollständig aufheben. Dies könnte der Fall sein, wenn der Generator induktive Blindleistung bezieht (im Verbraucherzählpfeilsystem, VZS, $Q_g$ > 0) und netztechnisch induktiver Blindleistungsbezug durch die EZE gefordert ist. Bei netzseitig gefordertem kapazitivem Blindleistungsbezug können sich die Blindstrombeträge des Generators (220) und des Stromnetzes (270) addieren, womit der Blindstrombetrag der Leistungselektronik (230) ansteigen kann.

Gemäß einem Aspekt kann die Regelung der Wirkleistung ferngesteuert oder frequenzabhängig eingestellt werden. Dabei kann die Wirkleistung durch die Anpassung der Prozess-Eintrittsleistung (die der ORC-Anlage (210) zugeführte Wärmeleistung (211)) umgesetzt werden. Zusätzlich oder alternativ kann die überschüssige Energie aus dem Knotenpunkt (250) über den Zwischenkreis-Energiespeicher (232), den Chopper (234) und den Bremswiderstand (240) in thermische Energie umgewandelt und so aus der EZE (200) abgeführt werden.

Gemäß einem Aspekt kann die Regelung der Blindleistungsbereitstellung für die statische Spannungshaltung und/oder für die dynamische Netzstützung, Fault-Ride-Through, FRT, durch Verschiebung des Ausgangsstroms der Leistungselektronik umgesetzt werden. Dabei kann die Regelung für die statische Spannungshaltung und/oder für die dynamische Netzstützung optimiert sein, wobei der Regelfehler bei der statischen Spannungshaltung mit einer größeren Ausregelzeit als bei der dynamischen Netzstützung ausgeregelt wird.

Gemäß einem Aspekt können für die Regelung des Leistungselektronik-Ausgangsstroms und/oder des Netzstroms für den Fachmann bekannte Methoden wie die Toleranzband-Regelung oder die phasenweise Rückkopplung des Netzstroms mit dem Sollwert des Netzstroms über einen P-Regler eingesetzt werden. Gemäß einem Aspekt kann die Regelung eine Vektor-Regelung in einem mit Netzfrequenz umlaufenden Koordinatensystem (d/q-Koordinaten) umfassen.

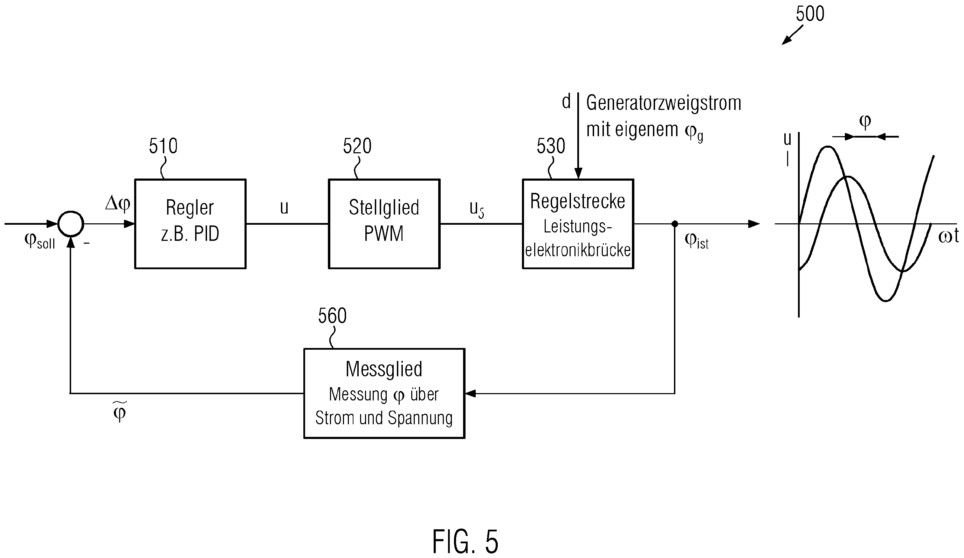

Figur 5 zeigt einen schematischen Regelkreis (500) für die Leistungselektronik der Ausführungsform nach Figur 2A zur Realisierung des Phasenverschiebungswinkels $\varphi$ im Phasenschieberbetrieb, repräsentativ für eine Phase des Dreiphasensystems dargestellt. Hierbei kann basierend auf der zeitlichen Phasenverschiebung zwischen der von der Messeinrichtung (560) gelieferten Netzspannung und dem Netzstrom der zu regelnden Phase ein Ist-Phasenverschiebungswinkel $\tilde{\varphi}$ ermittelt werden. Basierend auf der Regelabweichung $\Delta\varphi$ zwischen dem Soll-Phasenverschiebungswinkel $\varphi_{soll}$ und dem ermittelten Phasenverschiebungswinkel $\tilde{\varphi}$ werden mit einem Regler (510) die Zündzeitpunkte $u$ für die Schaltelemente des jeweiligen Brückenzweigs des Wechselrichters eingestellt, wobei der Regler (510) vorzugsweise einen P-, PI-, oder PID-Regler umfasst. Mit einem PWM-Steller bzw. -Wandler (520) können aus den Zündzeitpunkten

*u* PWM-Ansteuerungssignale $u_s$ für die Schaltelemente des Brückenzweigs, der Regelstrecke (530), gebildet werden. Dabei kann der Phasenverschiebungswinkel $\varphi_g$ zwischen der Phasennetzspannung und dem Generatorzweigstrom als Störgröße *d* Einfluss auf die Regelstrecke (530) nehmen.

Durch die Einsparung des Gleichrichters (131) in der Ausführungsform nach Figur 2A sinkt der Platzbedarf und die Verlustwärme im Schaltschranksystem. Zudem kann durch die direkte Speisung der erzeugten Generatorleistung in das Stromnetz (270) der Wirkungsgrad der EZE (200) in etwa um 4...7 % erhöht werden. Des Weiteren können die Kosten für die Leistungselektronik um etwa 38 % reduziert werden.

Ein weiterer Vorteil kann der reduzierte Windungsstress für den Generator (220) sein: Während bei der seriellen Verschaltung der Leistungselektronik (130) der Generator für zerhackte Gleichspannungen von 600...800 V mit hohen Anstiegsgeschwindigkeiten ausgelegt werden muss, kann der Generator (220) nach Figur 2A für sinusförmige Netzwechselspannung mit einer Frequenz von 50...60 Hz ausgelegt werden. Auch der durch die serielle Leistungselektronik (130) bedingte Effekt der 'schädigenden Lagerströme' kann bei der parallelen Verschaltung nach Figur 2A vermieden werden.

Ein weiterer Vorteil kann sein, dass die EZEs (200, 310...313) gemäß einem Baukasten modular und einheitlich gebaut und je nach den geforderten Einspeiseanforderungen wahlweise mit oder ohne Leistungselektronik (230) für eine zertifizierte Einspeisung ausgestattet oder nachgerüstet werden können.

**Patentansprüche**

1. Erzeugungseinheit, EZE, mit:

   einem Asynchrongenerator mit einem unmittelbaren Verbindungs-Zweig zu einem Stromnetz;
   einer Messeinrichtung zur Bestimmung der Verläufe einer EZE-Netzspannung und eines EZE-Netzstroms an dem Stromnetz;
   einer Leistungselektronik, die parallel zu dem Asynchrongenerator und dem Stromnetz geschaltet ist, wobei die Leistungselektronik umfasst:

   einen Wechselrichter mit einem Wechselrichterausgang zur unmittelbaren Verbindung mit dem Generator-Stromnetz-Zweig;
   einen Zwischenkreis-Energiespeicher, der DC-seitig parallel mit dem Wechselrichter verbunden ist, wobei der Zwischenkreis-Energiespeicher eine Zwischenkreisspannung aufweist;
   eine Steuereinheit, die basierend auf dem gemessenen Netzstrom und der gemessenen Netzspannung einen Phasenverschiebungswinkel und den Betrag des Netzstroms bestimmt und basierend hierauf den Wechselrichter so ansteuert, dass Betrag und Phasenverschiebungswinkel des Ausgangsstroms der Leistungselektronik Werte annehmen, die zusammen mit dem Strom des Asynchrongenerators einen Soll-Phasenverschiebungswinkel ergeben.

2. Die Erzeugungseinheit nach Anspruch 1, weiterhin umfassend einen Chopper mit einem seriellen Bremswiderstand zur Regelung der Netz-Einspeise-Wirkleistung, wobei die Serie aus Chopper und Bremswiderstand parallel zur DC-Seite des Wechselrichters verschaltet ist.

3. Die Erzeugungseinheit nach einem der vorhergehenden Ansprüche, **dadurch gekennzeichnet, dass** die Erzeugungseinheit eine Organic-Rankine-Cycle, ORC, Einheit mit einer Expansionsmaschine umfasst, wobei der Asynchrongenerator von der Expansionsmaschine angetrieben wird.

4. Die Erzeugungseinheit nach Anspruch 3, **dadurch gekennzeichnet, dass** der Asynchrongenerator in der Expansionsmaschine integriert ist.

5. Die Erzeugungseinheit nach einem der vorhergehenden Ansprüche, **dadurch gekennzeichnet, dass** der Asynchrongenerator einer Drehstromasynchronmaschine mit Kurzschluss-/Käfigläufer entspricht.

6. Die Erzeugungseinheit nach einem der vorhergehenden Ansprüche, **dadurch gekennzeichnet, dass** der Wechselrichter einem Zweipunkt-, Dreipunkt- oder Multi-Level-Wechselrichter entspricht.

7. Die Erzeugungseinheit nach einem der vorhergehenden Ansprüche, **dadurch gekennzeichnet, dass** der Zwischenkreis-Energiespeicher mindestens einen Zwischenkreis-Kondensator umfasst.

**8.** Die Erzeugungseinheit nach einem der vorhergehenden Ansprüche, **dadurch gekennzeichnet, dass** die Steuereinheit basierend auf der gemessenen Netzspannung und dem gemessenen Netzstrom eine PWM so berechnet, dass der Betrag und der Phasenverschiebungswinkel des Ausgangsstroms der Leistungselektronik die Werte annehmen, die zusammen mit dem Strom des Asynchrongenerators den Soll-Betrag des Netzstroms und den Soll-Phasenverschiebungswinkel ergeben.

**9.** Die Erzeugungseinheit nach Anspruch 2, **dadurch gekennzeichnet, dass** der Chopper so angesteuert wird, dass die im Zwischenkreis-Energiespeicher gespeicherte Energie über den Bremswiderstand in thermische Energie umgewandelt wird.

**10.** Die Erzeugungseinheit nach einem der vorhergehenden Ansprüche, **dadurch gekennzeichnet, dass** der Wechselrichterausgang einen seriellen Ausgangsfilter zur Glättung des pulsierenden Wechselrichter-Ausgangsstroms umfasst.

**11.** Die Erzeugungseinheit nach einem der vorhergehenden Ansprüche, **dadurch gekennzeichnet, dass** die Ansteuerung des Wechselrichters eine Regelung umfasst, wobei die Regelung eine Toleranzband-Regelung oder eine Vektor-Regelung in einem mit Netzfrequenz umlaufenden d/q-Koordinatensystem aufweist.

**12.** Die Erzeugungseinheit nach einem der vorhergehenden Ansprüche, **dadurch gekennzeichnet, dass** die EZE eine Blindleistung bis etwa 200 kvar bereitstellt.

**13.** Eine Erzeugungsanlage mit:

einem Transformator mit einer Unter- und Oberspannungsseite zur unmittelbaren Verbindung mit einem Netzanschlusspunkt eines Mittelspannungsnetzes;
einer oder einer Vielzahl von Erzeugungseinheiten, welche parallel mit der Unterspannungsseite des Transformators verschaltet sind, wobei mindestens eine Erzeugungseinheit der Erzeugungseinheit aus Anspruch 1 entspricht.

**Geänderte Patentansprüche gemäss Regel 137(2) EPÜ.**

**1.** Erzeugungseinheit, EZE (200), mit:

einem Asynchrongenerator (220) mit einem unmittelbaren Verbindungs-Zweig zu einem Stromnetz (270);
einer Messeinrichtung (260) zur Bestimmung der Verläufe einer EZE-Netzspannung und eines EZE-Netzstroms an dem Stromnetz (270);
einer Leistungselektronik (230), die parallel zu dem Asynchrongenerator (220) und dem Stromnetz (270) geschaltet ist, wobei die Leistungselektronik (230) umfasst:

einen Wechselrichter (233) mit einem Wechselrichterausgang (238) zur unmittelbaren Verbindung mit dem Generator-Stromnetz-Zweig;
einen Zwischenkreis-Energiespeicher (232), der DC-seitig parallel mit dem Wechselrichter (233) verbunden ist, wobei der Zwischenkreis-Energiespeicher (232) eine Zwischenkreisspannung aufweist;
eine Steuereinheit (236), die basierend auf dem gemessenen Netzstrom und der gemessenen Netzspannung einen Phasenverschiebungswinkel und den Betrag des Netzstroms bestimmt und basierend hierauf den Wechselrichter (233) so ansteuert, dass Betrag und Phasenverschiebungswinkel des Ausgangsstroms der Leistungselektronik (230) Werte annehmen, die zusammen mit dem Strom des Asynchrongenerators (220) einen Soll-Phasenverschiebungswinkel ergeben.

**2.** Die Erzeugungseinheit nach Anspruch 1, weiterhin umfassend einen Chopper (234) mit einem seriellen Bremswiderstand (240) zur Regelung der Netz-Einspeise-Wirkleistung, wobei die Serie aus Chopper (234) und Bremswiderstand (240) parallel zur DC-Seite des Wechselrichters (233) verschaltet ist.

**3.** Die Erzeugungseinheit nach einem der vorhergehenden Ansprüche, **dadurch gekennzeichnet, dass** die Erzeugungseinheit eine Organic-Rankine-Cycle, ORC, Einheit (210) mit einer Expansionsmaschine (212) umfasst, wobei der Asynchrongenerator (220) von der Expansionsmaschine (212) angetrieben wird.

4. Die Erzeugungseinheit nach Anspruch 3, **dadurch gekennzeichnet, dass** der Asynchrongenerator (220) in der Expansionsmaschine (212) integriert ist.

5. Die Erzeugungseinheit nach einem der vorhergehenden Ansprüche, **dadurch gekennzeichnet, dass** der Asynchrongenerator (220) einer Drehstromasynchronmaschine mit Kurzschluss-/Käfigläufer entspricht.

6. Die Erzeugungseinheit nach einem der vorhergehenden Ansprüche, **dadurch gekennzeichnet, dass** der Wechselrichter (233) einem Zweipunkt-, Dreipunkt- oder Multi-Level-Wechselrichter entspricht.

7. Die Erzeugungseinheit nach einem der vorhergehenden Ansprüche, **dadurch gekennzeichnet, dass** der Zwischenkreis-Energiespeicher (232) mindestens einen Zwischenkreis-Kondensator umfasst.

8. Die Erzeugungseinheit nach einem der vorhergehenden Ansprüche, **dadurch gekennzeichnet, dass** die Steuereinheit (236) basierend auf der gemessenen Netzspannung und dem gemessenen Netzstrom eine PWM so berechnet, dass der Betrag und der Phasenverschiebungswinkel des Ausgangsstroms der Leistungselektronik (230) die Werte annehmen, die zusammen mit dem Strom des Asynchrongenerators (220) den Soll-Betrag des Netzstroms und den Soll-Phasenverschiebungswinkel ergeben.

9. Die Erzeugungseinheit nach Anspruch 2, **dadurch gekennzeichnet, dass** der Chopper (234) so angesteuert wird, dass die im Zwischenkreis-Energiespeicher (232) gespeicherte Energie über den Bremswiderstand (240) in thermische Energie umgewandelt wird.

10. Die Erzeugungseinheit nach einem der vorhergehenden Ansprüche, **dadurch gekennzeichnet, dass** der Wechselrichterausgang (238) einen seriellen Ausgangsfilter (237) zur Glättung des pulsierenden Wechselrichter-Ausgangsstroms umfasst.

11. Die Erzeugungseinheit nach einem der vorhergehenden Ansprüche, **dadurch gekennzeichnet, dass** die Ansteuerung des Wechselrichters (233) eine Regelung umfasst, wobei die Regelung eine Toleranzband-Regelung oder eine Vektor-Regelung in einem mit Netzfrequenz umlaufenden d/q-Koordinatensystem aufweist.

12. Die Erzeugungseinheit nach einem der vorhergehenden Ansprüche, **dadurch gekennzeichnet, dass** die EZE (200) eine Blindleistung bis etwa 200 kvar bereitstellt.

13. Eine Erzeugungsanlage (300) mit:

einem Transformator (320, 321, 323) mit einer Unter- und Oberspannungsseite zur unmittelbaren Verbindung mit einem Netzanschlusspunkt eines Mittelspannungsnetzes (370);
einer oder einer Vielzahl von Erzeugungseinheiten (310-313), welche parallel mit der Unterspannungsseite des Transformators (320, 321, 323) verschaltet sind, wobei mindestens eine Erzeugungseinheit (310-313) der Erzeugungseinheit (200) aus Anspruch 1 entspricht.

FIG. 1
(Stand der Technik)

FIG. 2A

FIG. 2B

EP 3 940 913 A1

FIG. 3

EP 3 940 913 A1

> Einspeisung bei cos $\varphi = 1$

$\underline{U}_{EzE}$

$\underline{U}_{Ln}$

$\underline{I}_{EZE}$

$\underline{U}_{Zn}$

$\Psi$

$\underline{U}_0$

$\underline{U}_{Rn}$

$\underline{I}_{EZE}$

**FIG. 4B**

$\underline{U}_0$

$\underline{I}_{EZE}$

$\underline{U}_{EZE}$

$\underline{U}_{Rn}$   $R_n$

$\underline{U}_{EZE}$

$\underline{U}_{Zn}$

$\underline{U}_{Ln}$   $L_n$

$$\underline{U}_{EZE} = \underline{U}_{Zn} + \underline{U}_0$$

**FIG. 4A**

> Einspeisung bei cos $\varphi = 0{,}95$ (ind.)

$\underline{U}_{EZE}$

$\underline{U}_{Ln}$

$\underline{I}_{EZE}$   $\mathrm{Im}\{\underline{I}_{EZE}\}$

$\underline{U}_{Zn}$

$\varphi$

$\mathrm{Re}\{\underline{I}_{EZE}\}$

$\Psi$

$\varphi$

$\underline{U}_0$

$\underline{U}_{Rn}$   $\underline{I}_{EZE}$

**FIG. 4C**

Spannungsanhebung $\Delta U/U_n$ in Prozent

FIG. 4D

FIG. 5

EP 3 940 913 A1

Europäisches Patentamt
European Patent Office
Office européen des brevets

**EUROPÄISCHER RECHERCHENBERICHT**

Nummer der Anmeldung

EP 20 18 5775

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | CN 108 493 962 B (NANJING HEXI ELECTRICAL CO LTD) 8. März 2019 (2019-03-08)<br>* Absatz [0033] - Absatz [0071]; Abbildungen 1-7 *<br>----- | 1,3,4,7,8,10,11<br>2 | INV.<br>H02J3/38<br>H02J3/48<br>H02J3/50<br>H02J3/18 |
| Y | WO 2011/110193 A1 (POWERWIND GMBH [DE]; BARTSCH MATTHIAS [DE])<br>15. September 2011 (2011-09-15)<br>* Seite 5, Zeile 1 - Seite 6, Zeile 6; Abbildungen 6,7 *<br>----- | 2 | |
| X | DE 19 32 272 A1 (SIEMENS AG)<br>23. Dezember 1970 (1970-12-23)<br>* Seite 5 - Seite 6; Abbildungen 1-4 *<br>----- | 1,5,6 | |
| A | CN 109 390 960 B (NANJING HEXI ELECTRIC CO LTD) 30. Juni 2020 (2020-06-30)<br>* das ganze Dokument *<br>----- | 1-13 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 4. Dezember 2020 | Jonda, Sven |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**

EP 20 18 5775

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2020

| Im Recherchenbericht angeführtes Patentdokument | Datum der Veröffentlichung | Mitglied(er) der Patentfamilie | Datum der Veröffentlichung |
|---|---|---|---|
| CN 108493962 B | 08-03-2019 | KEINE | |
| WO 2011110193 A1 | 15-09-2011 | KEINE | |
| DE 1932272 A1 | 23-12-1970 | DE 1932272 A1<br>JP S5030831 B1 | 23-12-1970<br>04-10-1975 |
| CN 109390960 B | 30-06-2020 | KEINE | |

Für nähere Einzelheiten zu diesem Anhang : siehe Amtsblatt des Europäischen Patentamts, Nr.12/82

EPO FORM P0461